# EUROPÄISCHE PATENTSCHRIFT

(11) **EP 0 479 759 B1**
(45) Veröffentlichungstag und Bekanntmachung des Hinweises auf die Patenterteilung: **07.12.1994**
(21) Anmeldenummer: 91890209.9
(22) Anmeldetag: 13.09.1991
(51) Int. Cl.: G01D 5/36, G01D 5/34

(54) **Verfahren und Vorrichtung zur Längen- oder Winkelmessung**
Procedure and device for length or angle measurement
Procédé et dispositif pour la mesure de longueurs ou d'angles

(30) Priorität: 05.10.1990 AT 2015/90
(43) Veröffentlichungstag der Anmeldung: 08.04.1992
(73) Patentinhaber: RSF-Elektronik Gesellschaft m.b.H., A-5121 Tarsdorf 93 (AT)
(72) Erfinder: Heinz, Rieder, A-5110 Oberndorf (AT); Max, Schwaiger, A-5121 Ostermiething (AT)
(74) Vertreter: Hübscher, Helmut, Dipl.-Ing.

(56) Entgegenhaltungen:
- DE-A- 3 831 417
- US-A- 4 720 631
- PROCEEDINGS OF THE IEEE NAECON, Bd. 1, 21. Mai 1984, Dayton, OH, US, Seiten 90-96; G.M. BARNEY: "Enhanced Terrain Masked Penertration Program"
- IRE TRANSACTIONS ON AEROSPACE AND NAVIGATIONAL ELECTRONICS, Bd. 15, Nr. 4, 1. Juli 1979, New York, US, Seiten 547-554; C.G.REED: "Range correlation guidance for cruise missiles"
- PATENT ABSTRACTS OF JAPAN, vol. 8, no. 6 (P-247)(1443) 12.Januar 1984 & JP-A-58 168 914

## Beschreibung

Die Erfindung betrifft ein Verfahren zum Messen von Längen und Winkeln auf optisch-elektronischem Wege, bei dem eine in Aufeinanderfolge unterscheidbare Strukturen zeigende, definierte Meßstrecke auf einem Objekt beleuchtet, über eine oder mehrere lichtempfindliche Empfangseinrichtungen abgetastet und aus den Signalen der Empfangseinrichtungen Positionssignale zur Betätigung von Anzeige- oder Steuereinrichtungen gewonnen werden.

Die Erfindung betrifft auch eine Vorrichtung zur Durchführung dieses Verfahrens mit einer Meßstrecke auf einem Objekt, Bleuchtungseinrichtungen und lichtempfindlichen Empfangseinrichtungen auf einer relativ zum Objekt verstellbaren Abtasteinrichtung mit nachgeordneter, einen Rechner mit Speicher, Adressiereinrichtungen und Vergleichseinrichtungen aufweisenden Auswertungseinheit zur Erzeugung von die Relativlage der Abtasteinrichtung auf der Meßstrecke definierenden Positionssignalen zur Betätigung von Anzeige- oder Steuereinrichtungen.

Bisher wird bei Verfahren und Vorrichtungen der gegenständlichen Art die Meßstrecke durch einen Maßstab auf einem Objekt definiert, wobei die jeweilige Meßteilung für genauere Messungen fast ausschließlich auf einem eigenen, vorzugsweise aus Glas hergestellten Maßstabkörper angebracht wird. Dabei sind grundsätzlich sogenannte Absolutmaßstäbe, Inkrementalmaßstäbe oder Kombinationen aus beiden Maßstabarten möglich. Der Maßstab muß in einem aufwendigen Verfahren hergestellt werden, wobei der Aufwand umso größer wird je genauer die Meßteilung und das erzielbare Auflösungsvermögen sind. Für Linearmessungen werden gerade Maßstäbe verwendet, wogegen für die Messung von Winkeln entsprechende Meßteilungen auf einer Scheibe meist in der Außenform eines Kreisringes angebracht werden müssen. Bei nach optoelektronischen Abtastprinzipien abtastbaren Absolutmaßstäben werden vorzugsweise mehrspurige codierte Maßstäbe verwendet, bei denen jede Spur von einer eigenen Abtasteinrichtung abgetastet wird. Die erhaltenen codierten Signale geben direkt, meist in digitaler Form, die momentane Stellung der Abtasteinheit am Maßstab an und können nach Umwandlung unmittelbar für die Betätigung von Anzeige- oder Steuereinrichtungen verwendet werden. Bei Inkrementalmaßstäben besteht die Meßteilung vorzugsweise aus gleichgroßen, aufeinanderfolgenden Hell-Dunkelfeldern, wobei die Abtastung mit Hilfe fotoelektrischer Empfänger durch Abtastgitter hindurch erfolgt, so daß bei der Verstellung Signalschwankungen im Empfängersignal auftreten, deren Signalzuglänge der Meßteilung proportional ist. Diese analogen Signale können, im einfachsten Fall durch Nulldurchgangserfassung, in digitale Zählsignale umgeformt und zur Steuerung von Vor-Rückwärtszähleinrichtungen verwendet werden, wobei der Zählerinhalt den Abstand der Abtasteinheit von jener Stelle des Maßstabes angibt, an der die Zähleinrichtung auf Null gesetzt wurde. Durch Erzeugung von wenigstens zwei phasenverschobenen Signalen über versetzte Abtastgitter ist eine Richtungserkennung und entsprechende Steuerung des Vor-Rückwärtszählers möglich. Eine Vorrichtung zür Längen- oder Winkelmessung mit einem eine Zufallstruktur aufweisenden Photodetektor-array ist aus US-A- 4 720 631 bekannt.

Für die elektronische Maßstabunterteilung ist es bekannt, Mehrfachauswertungen der Meßsignale über Teilerketten, und bzw. oder Interpolationsberechnungen mit Hilfe eines Rechners in der Auswertungseinheit durchzuführen, der die Interpolationsberechnung aus den momentanen Signalpegeln der Abtastsignale durchführt, wobei er diesen Signalpegeln zugeordnete Speicherplätze eines Interpolationsspeichers ansteuert.

Ein Rechner wird bisher auch verwendet, wenn für besonders genaue Messungen Maßstabfehler korrigiert werden sollen. Dabei wird vorzugsweise der Maßstab des Meßsystems mit der Abtasteinheit abgetastet, wobei gleichzeitig ein übergeordnetes Meßsystem, z. B. ein Laser-Interferometer eingesetzt und die Meßergebnisse verglichen werden. Für bei der Abtastung des Maßstabes auftretende Abweichungen vom Soll-Meßergebnis des übergeordneten Meßsystems werden in einem dem Rechner zugeordneten Korrekturspeicher Korrekturwerte gespeichert und dann, wenn bei folgenden Messungen die betreffende Maßstabstelle erreicht wird, zur Durchführung von Korrekturen berücksichtigt.

Aufgabe der Erfindung ist die Schaffung eines neuen Meßverfahrens, bei dem der bisher für die Herstellung der Maßstäbe, die Montage der Maßstäbe sowie deren Ausrichtung getriebene Aufwand wesentlich reduziert werden kann. Eine Teilaufgabe der Erfindung besteht in der Schaffung einer zur Durchführung des Verfahrens geeigneten Vorrichtung.

Das erfindungsgemäße Verfahren ist im wesentlichen dadurch gekennzeichnet, daß die Meßstrecke durch einen eine zumindest weitgehend wiederholungsfreie Zufallsstruktur aufweisenden, streifenförmigen Bereich auf dem Objekt definiert und als Empfangseinrichtung wenigstens eine einen Abschnitt der Meßstrecke erfassende Bildaufnahmeinrichtung verwendet wird, daß in einem Eichvorgang insbesondere unter Einsatz eines übergeordneten Meßsystemes, Meßpunkte der Meßstrecke durch Speicherung von das am jeweiligen Meßpunkt der Meßstrecke empfangene Bild kennzeichnenden Werten definiert werden und daß bei der Messung selbst die mit der bzw. den Bildaufnahmeeinrichtungen erzeugten Signale auf die einen Maßstab bildenden Speicherwerte bezogen werden, daraus die Lage der Meßstelle auf der Meßstrecke bestimmt wird und entsprechende Positionssignale erzeugt werden.

Die Grundüberlegung der Erfindung besteht darin, daß man bei einer mit einer Bildaufnahmeeinrichtung erfaßbaren Zufallsstruktur über den Speicher Meßstellen zuordnen kann, so daß an sich jede Maßstabstelle durch die für sie charakteristische Zufallsstruktur gekennzeichnet ist, damit ergibt sich ein äußerst einfach herstellbarer Maßstab, wobei trotzdem bei Verwendung eines entsprechend genauen übergeordneten Meßsystemes für die Eichung eine hohe Meßgenauigkeit erzielt werden kann. Praktisch kann man nach den erfindungsgemäßen Verfahren ein absolutes Meßsystem erhalten, bei dem die Stellung der Abtasteinheit über der Meßstrecke im Bereich jeder Stelle durch die aufgenommenen Bildsignale der erfaßten Oberflächenstruktur definiert sind. Falls erwünscht, kann auch ein quasi-inkrementaler Maßstab dadurch gebildet werden, daß im Speicher konstanten Abständen auf der Meßstrecke zugeordnete Bildinhalte gespeichert und jeweils bei Erfassung eines solchen Bildinhaltes bei der Abtastung ein Zählsignal ausgelöst wird, das gegebenenfalls für Steuerungen herangezogen werden kann. Grundsätzlich kann die Messung nach dem erfindungsgemäßen Verfahren als alleinige Messung für die Bestimmung von Längen und Winkeln eingesetzt werden. Es ist aber auch möglich, das erfindungsgemäße Verfahren zusätzlich zu einem der bekannten, mit einer herkömmlichen Meßeinrichtung arbeitenden Verfahren einzusetzen, wobei etwa bei der Verwendung des erfindungsgemäßen Verfahrens parallel zu einem bekannten inkrementalen Meßverfahren die nach dem erfindungsgemäßen Verfahren erhaltenen Meßwerte zur unmittelbaren Anzeige der Absolutposition verwendbar sind oder nach einer anderen Ausführungsform das erfindungsgemäße Verfahren eingesetzt wird, um aus mehreren, einem Inkrementalmaßstab absolut zugeordneten Referenzmarken eine oder mehrere für die Erzeugung von Referenzimpulsen auszuwählen. Die erforderliche Feinheit der unterscheidbaren Strukturen und die Feinheit des notwendigen Bildempfanges, das heißt das Auflösungsvermögen der Bildaufnahmeeinrichtung hängt davon ab, welche Aufgaben mit dem erfindungsgemäßen Verfahren zu lösen sind. Für genaue Absolutmessungen wird selbstverständlich ein höheres Auflösungsvermögen notwendig sein, als zu relativ groben Bestimmungen von etwa einer bestimmten Referenzmarke zugeordneten Stellen eines inkrementalen Maßstabes. Aus diesen Förderungen ergibt sich auch die praktische Realisierung der Meßstrecke. Für die Positionierung von Maschinenteilen ergibt sich die weitere Möglichkeit, entweder unter gleichzeitiger Durchführung einer Messung oder bei Wiederholungsarbeiten etwa bei Serienfertigungen ausgewählten Punkten auf der Meßstrecke zugeordnete Bildinhalte zu speichern und so Steuerpunkte bzw. Bearbeitungspunkte festzulegen. In Sonderfällen könnte sogar z. B. bei Bearbeitungsmaschinen ein einer beliebigen Kurve folgender Verlauf der Meßstrecke auf einem entsprechenden Trägerobjekt vorgegeben werden, wenn entsprechende Einrichtungen vorhanden sind, damit die Abtasteinheit diesem Verlauf der Meßstrecke folgen kann.

Nach einer bevorzugten Ausführung wird als Meßstrecke ein durch seine Rauhigkeit, Bearbeitungsspuren, Kristallstrukturen und/oder eine Beschichtung bei der Projektionsbeleuchtung ein Zufallsmuster mit von der Bildaufnahmeeinrichtung unterscheidbaren Bildinhalten in aufeinanderfolgenden Bereichen zeigender Streifen eines Trägerobjektes verwendet. Es besteht sogar die Möglichkeit, die Meßstrecke als Oberflächenstreifen auf einem Teil einer Maschine, z. B. einem Maschinenbett zu definieren. Selbstverständlich wird man hier dafür Sorge tragen, daß sich die Bildinhalte der Oberflächenstruktur nicht durch Verschmutzung, Abrieb usw. ändern bzw. im Abriebfall Nacheichungen vornehmen.

Nach einer anderen Ausführung wird die Meßstrecke als über die als Projektionseinrichtung ausgebildete Bleuchtungseinrichtung durchleuchteter Streifen eines gegebenenfalls mit einer ein Zufallsmuster ergebenden Beschichtung versehenen, transparenten Objektes definiert. Als Beschichtung kommen Lacküberzüge, aufgesprühte Farben oder in einem galvanischen Verfahren bzw. Bedampfungs- oder Glimmlichtentladungsbeschichtungsverfahren aufgebrachte Elemente, z. B. Metalle oder Metalloxide in Frage. Wesentlich ist, wie schon mehrfach erwähnt, daß sich ein in seinen einzelnen Bereichen unterscheidbares Zufallsmuster ergibt. Ob streifenförmige oder eine größere Breite aufweisende Bereiche der Meßstrecke abgetastet bzw. mit der Bildaufnahmeeinrichtung erfaßt werden, hängt von der Art der verwendeten Bildaufnahmeeinrichtung und zum Teil auch von der angestrebten Meßgenauigkeit ab. Es können Bildaufnahmeeinrichtungen mit Linienrastern oder auch Aufnahmeeinrichtungen, die ein Videosignal erzeugen, Verwendung finden, wobei dieses Videosignal zur Erleichterung der Abspeicherung der Eichsignale sowie zur Ermöglichung der Lagebestimmung bzw. Lageberechnung vorzugsweise digitalisiert wird.

In den Projektionsweg zwischen Beleuchtungseinrichtung, beleuchteten Abschnitt der Meßstrecke und Bildaufnahmeeinrichtung bzw. Bildaufnahmeeinrichtungen können Vergrößerungseinrichtungen, Raster oder Filter zur Verbesserung der Unterscheidbarkeit der Strukturen eingeschaltet werden. Bei zwei oder mehreren Bildaufnahmeeinrichtungen können diese unter verschiedenen Anstellwinkeln auf die beleuchtete Stelle der Meßstrecke gerichtet und gegebenenfalls auch mit verschiedenen Filtern ausgestattet sein, um so die Unterscheidbarkeit der Oberflächenmuster zu verbessern. Nach einer Variante wird eine einen größeren Bildbereich erfassende Bildaufnahmeeinrichtung und eine nur einen Bildausschnitt mit größerem Auflösungsvermögen erfassende Bildaufnahmeeinrichtung eingesetzt.

Vor allem dann, wenn eine Bildaufnahmeeinrichtung Verwendung findet, die einen größeren Bildbereich erfaßt, kann die Bilderzeugung dadurch vereinfacht werden, daß als Beleuchtungseinrichtung ein Laser vorgesehen wird, der den von der Bildaufnahmeeinrichtung erfaßbaren Bildausschnitt zeilenweise, insbesondere mit gegenüber der Verstellgeschwindigkeit der Abtasteinheit gegenüber der Meßstrecke hoher Zeilenvorschubgeschwindigkeit abtastet.

Eine weitere Möglichkeit des erfindungsgemäßen Verfahrens besteht darin, daß innerhalb der aufeinanderfolgend von der Bildaufnahmeeinrichtung erfaßbaren Abschnitte des streifenförmigen Bereiches kleinere Bildabschnitte erfaßt, die ihnen zugeordneten Bildsignale gesondert gespeichert und bei der Auswertung aus der Lage eines auf den Bildabschnitt ausgerichteten Bildfensters zum gesamten Bildausschnitt die genaue Lage des Bildausschnittes auf der Meßstrecke und damit das Meßergebnis berechnet wird. Bei diesem Verfahren wird die an sich bekannte Zielverfolgungsberechnung durch Bestimmung der Lage eines Bildfensters im Bildausschnitt für die Messung herangezogen.

Wie erwähnt wurde, kann das erfindungsgemäße Verfahren auf verschiedenste Weise und mit verschiedenen Vorrichtungen realisiert werden. Eine insbesondere anstelle herkömmlicher absoluter Längen- oder Winkelmeßsysteme mit codiertem Maßstab verwendbare Vorrichtung zur Durchführung des erfindungsgemäßen Verfahrens ist dadurch gekennzeichnet, daß die Meßstrecke durch einen eine zumindest weitgehend wiederholungsfreie Zufallsstrukturen aufweisenden, streifenförmigen Bereich auf dem Objekt definiert ist, daß als Empfangseinrichtung wenigstens eine einen Abschnitt der Meßstrecke erfassende Bildaufnahmeeinrichtung vorgesehen ist und daß die Auswertungseinheit einen Maßstabspeicher und eine Vergleichseinrichtung enthält, wobei im Maßstabspeicher insbesondere durch gemeinsame Abtastung der Meßstrecke mit der Abtasteinrichtung und einem übergeordneten Meßsystem definierten Meßpunkten der Meßstrecke zugeordnete, das Bild am jeweiligen Meßpunkt definierende Signalwerte gespeichert sind und die Vergleichseinrichtung bei der Messung die von der Bildaufnahmeeinrichtung erzeugten Signale mit den Speicherwerten vergleicht und entsprechend der Übereinstimmung die Positionssignale erzeugt.

Weitere Einzelheiten und Vorteile des erfindungsgemäßen Verfahrens entnimmt man der nachfolgenden Zeichnungsbeschreibung.

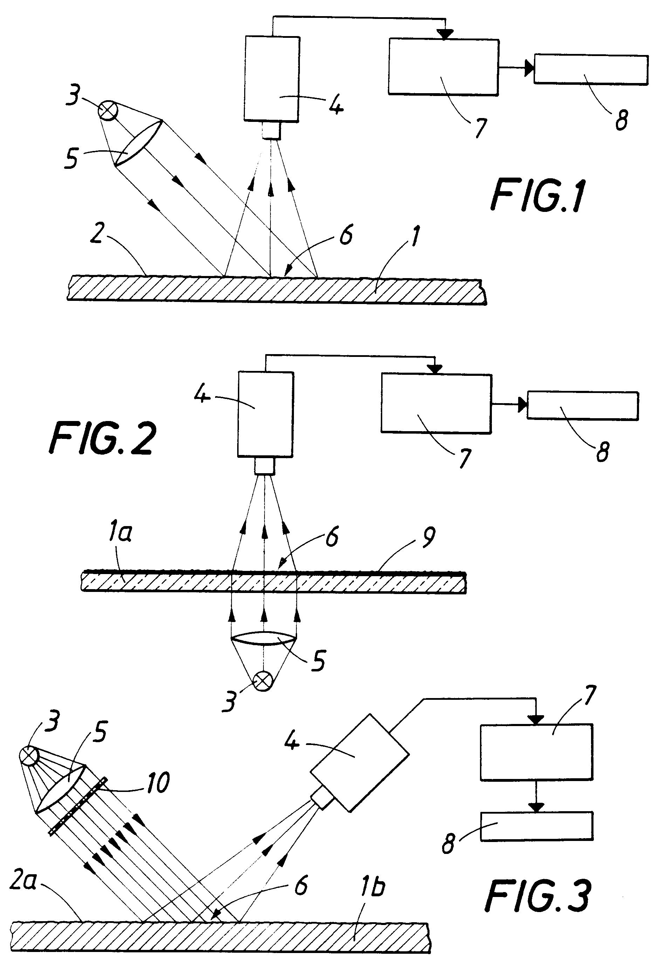

In den Fig. 1 bis 3 der Zeichnung sind drei verschiedene Anordnungen zur Durchführung des erfindungsgemäßen Verfahrens schematisiert und zum Teil im Blockschaltschema veranschaulicht.

Nach Fig. 1 wird auf einem Objekt 1, daß eine eine gewisse Rauhigkeit aufweisende reflektierende Oberfläche 2 besitzt eine Meßstrecke durch den relativen Verstellweg einer Beleuchtungseinrichtung 3 und einer Bildaufnahmeeinrichtung 4 gegenüber dem Objekt definiert. Die Beleuchtungseinrichtung besitzt nach Fig. 1 eine Optik 5 zur Erzeugung von parallel gerichtetem Licht, mit dem ein Bildausschnitt 6 auf der Oberfläche 2 beleuchtet wird, so daß bei der Relativbewegung von Objekt 1, Beleuchtungseinrichtung 3 und Bildaufnahmeeinrichtung 4 ein streifenförmiger Bereich der Meßstrecke abgetastet wird. Die Bildaufnahmeeinrichtung 4 erzeugt aus den aufgenommenen Bildern digitale Bild- oder Videosignale die einer mit einem Rechner ausgestatteten Auswertungselektronik7zugeführt werden.

Die Meßstrecke wird zunächst unter Durchführung einer Bildaufnahme mit der Bildaufnahmeeinrichtung 4 und gleichzeitiger Messung des zurückgelegten Weges bzw. Drehwinkels mit einem übergeordneten Meßsystem, z. B. einem Laserinterferometer abgetastet, wobei einzelnen Meßpunkten zugeordnete Bildsignale in einem Maßstabspeicher des Rechners gespeichert werden. Bei der eigentlichen Messung wird durch Vergleich der Speicherwerte mit den empfangenen Bildsignalen die Absolutlage der Abtasteinheit gegenüber der Meßstrecke festgestellt. Es sind hier verschiedene Verfahren abhängig vom verwendeten Rechner, der verwendeten Elektronik bzw. der verwendeten Aufnahmeeinrichtung möglich. Vorzugsweise werden Korrelationsberechnungen vorgenommen. Nach einer Variante werden jedem Meßpunkt zugeordnet kleineren Bildausschnitten entsprechende Bildfenster gesondert erfaßt und ihre Bildinhalte gespeichert, wobei bei der Meßabtastung in dem jeweils erfaßten Bildausschnitt ein durch die Speicherwerte gekennzeichnetes Bildfenster aufgesucht und durch Berechnung der Lage dieses Fensters im Gesamtbildausschnitt die Messung beendet wird. Die Meßergebnisse können auf eine Anzeigeeinrichtung 8 ausgegeben werden.

Bei der Ausführung nach Fig. 2 wird als Objekt 1a ein transparenter Körper verwendet, der gegebenenfalls eine ein Zufallsmuster ergebende Oberflächenbeschichtung 9 erhält.

Schließlich ist nach Fig. 3 ein eine reflektierende, rauhe Oberfläche 2a aufweisendes Objekt 1b vorhanden und der Beleuchtungseinrichtung 3, 5 ist ein Raster 10 nachgeordnet, durch den hindurch die Oberfläche 2a schräg beleuchtet wird. Bei Verwendung eines Linienrasters ergibt ein mit geraden Linien projizierter Raster an Rauhigkeiten an der Oberfläche 2a gekrümmte Linien, die die Identifizierung verschiedener Oberflächenstrukturen erleichtern. Ebenso kann ein z. B. in gleicher Teilung projizierter Punkteraster die Identifizierung der einzelnen Oberflächenbereiche durch die auf Grund der Rauhigkeit auftretenden Unregelmäßigkeiten im erfaßten Punktbild erleichtern. Anstelle eines Rasterfilters können auch andere Filter, z. B. Polarisationsfilter, Farbfilter usw. eingesetzt werden. Zur Erfassung feiner Strukturen kann auch eine vergrößernde Lichtprojektion vorgenommen oder eine Bildaufnahmeeinrichtung 4 mit vergrößernder Optik eingesetzt werden.

## Patentansprüche

1. Verfahren zum Messen von Längen und Winkeln auf optoelektronischem Wege, bei dem eine in Aufeinanderfolge unterscheidbare Strukturen zeigende streifenförmige, definierte Meßstrecke (2) auf einem Objekt (1) beleuchtet, aufeinanderfolgende Abschnitte (6) dieser Meßstrecke über eine oder mehrere lichtempfindliche Empfangseinrichtungen (4) abgetastet und aus den Signalen der Empfangseinrichtungen (4) unter Vergleich mit in einem Eichvorgang unter Einsatz eines übergeordneten Meßsystemes erhaltenen Speicherwerten Positionssignale zur Betätigung von Anzeige- oder Steuereinrichtungen (8) gewonnen werden, dadurch gekennzeichnet, daß
- die Meßstrecke (2) durch einen in Aufeinanderfolge zumindest weitgehend wiederholungsfreie, unterscheidbare Zufallsstrukturen aufweisenden, streifenförmigen Bereich (2) auf dem Objekt (1) definiert wird,
- daß als Empfangseinrichtung (4) wenigstens eine Bildaufnahmeeinrichtung verwendet wird, die bei der Abtastung aufeinanderfolgende, wiederholungsfrei unterscheidbare Abschnitte (6) der Meßstrecke erfaßt und zugeordnete Signalwerte erzeugt,
- daß im Eichvorgang unter Einsatz des übergeordneten Meßsystems die Meßpunkte der Meßstrecke durch Speicherung der das am jeweiligen Meßpunkt der Meßstrecke empfangene Bild kennzeichnenden Signale definiert werden und dadurch ein Maßstab bestimmt wird,
- und daß bei der Messung selbst die mit der bzw. den Bildaufnahmeeinrichtugnen (4) erzeugten Signale auf die den Maßstab bestimmenden Speicherwerte bezogen werden, daraus die Lage der jeweiligen Meßstelle auf der Meßstrecke (2) bestimmt wird und entsprechende Positionssignale erzeugt werden.

2. Verfahren nach Anspruch 1, dadurch gekennzeichnet, daß als Meßstrecke ein durch seine Rauhigkeit, Bearbeitungsspuren, Kristallstrukturen und/oder eine Beschichtung bei der Projektionsbeleuchtung ein Zufallsmuster mit von der Bildaufnahmeeinrichtung unterscheidbaren Bildinhalten in aufeinanderfolgenden Bereichen zeigender Streifen eines Trägerobjektes verwendet wird.

3. Verfahren nach den Ansprüchen 1 und 2, dadurch gekennzeichnet, daß die Meßstrecke als Oberflächenstreifen auf einem Teil einer Maschine definiert wird.

4. Verfahren nach den Ansprüchen 1 und 2, dadurch gekennzeichnet, daß die Meßstrecke als über die als Projektionseinrichtung ausgebildete Beleuchtungseinrichtung durchleuchteter Streifen eines gegebenenfalls mit einer ein Zufallsmuster ergebenden Beschichtung versehenen transparenten Objektes definiert wird.

5. Verfahren nach einem der Ansprüche 1 bis 4, dadurch gekennzeichnet, daß in den Projektionsweg zwischen Beleuchtungseinrichtung, beleuchteten Abschnitt der Meßstrecke und Bildaufnahmeeinrichtung bzw. Bildaufnahmeneinrichtungen Vergrößerungseinrichtungen, Raster oder Filter zur Verbesserung der Unterscheidbarkeit der Strukturen eingeschaltet werden.

6. Verfahren nach einem der Ansprüche 1 bis 5, dadurch gekennzeichnet, daß als Beleuchtungseinrichtung ein den von der Bildaufnahmeinrichtung erfaßbaren Bildausschnitt zeilenweise abtastender Laser vorgesehen wird.

7. Verfahren nach einem der Ansprüche 1 bis 6, dadurch gekennzeichnet, daß innerhalb der aufeinanderfolgend von der Bildaufnahmeeinrichtung erfaßbaren Abschnitte des streifenförmigen Bereiches kleinere Bildabschnitte erfaßt, die ihnen zugeordneten Bildsignale gesondert gespeichert und bei der Auswertung aus der Lage eines auf den Bildabschnitt ausgerichteten Bildfensters zum gesamten Bildausschnitt die genaue Lage des Bildausschnittes auf der Meßstrecke und damit das Meßergebnis berechnet wird.

8. Vorrichtung zur Durchführung des Verfahrens nach einem der Ansprüche 1 bis 7, mit einer Meßstrecke auf einem Objekt, Bleuchtungseinrichtungen und lichtempfindlichen Empfangseinrichtungen auf einer relativ zum Objekt verstellbaren Abtasteinrichtung mit nachgeordneter, einen Rechner mit Speicher, Adressiereinrichtungen und Vergleichseinrichtungen aufweisenden Auswertungseinheit zur Erzeugung von die Relativlage der Abtasteinrichtung auf der Meßstrecke definierenden Positionssignalen zur Betätigung von Anzeige- oder Steuereinrichtungen, dadurch gekennzeichnet, daß die Meßstrecke durch einen im Aufeinanderfolge zumindest weitgehend wiederholungsfreie, unterscheidbare Zufallsstrukturen (2, 2a, 9) aufweisenden, streifenförmigen Bereich auf dem Objekt (1, 1a, 1b) definiert ist, daß als Empfangseinrichtung wenigstens eine einen Abschnitt der Meßstrecke erfassende Bildaufnahmeeinrichtung (4) vorgesehen ist und daß die Auswertungseinheit (7) einen Maßstabspeicher und eine Vergleichseinrichtung enthält, wobei im Maßstabspeicher in einem Eichvorgang durch Abtastung der Meßstrecke mit der Abtasteinrichtung unter Einsatz eines übergeordneten Meßsystems definierten Meßpunkten der Meßstrecke zugeordnete, das Bild am jeweiligen Meßpunkt definierende Signalwerte gespeichert sind und die Vergleichseinrichtung bei der Messung die von der Bildaufnahmeeinrichtung erzeugten Signale mit den Speicherwerten vergleicht und entsprechend der Übereinstimmung die Positionssignale erzeugt.

## Claims

1. A method of measuring lengths and angles optoelectronically, wherein a defined measuring zone (2) in the form of a strip having successively distinguishable structures and located on an object (1) is illuminated, successive portions (6) of said measuring zone are scanned via one or more light-sensitive receiving means (4) and position signals for actuating display or control means (8) are obtained from the signals of the receiving means (4) by comparison with memory values obtained in a calibration operation using a primary measuring system, characterised in that:
- the measuring zone (2) is defined by a zone (2) in the form of a strip on the object (1), such zone having distinguishable random structures which are at least substantially free of successive repetition,
- in that the receiving means (4) used is at least one image recording means which, during the scanning, detects successive portions (6) of the measuring zone which are distinguishable without repetition, and generates associated signal values,
- in that in the calibration operation using the primary measuring system the measured points of the measuring zone are defined by storing signals characterising the image received at the associated measured point of the measuring zone, a scale thus being determined,
- and in that during the measurement itself the signals generated by the or each image recording means (4) are related to the memory values defining the scale, the position of the associated measured point on the measuring zone (2) is determined therefrom and corresponding position signals generated.

2. A method according to claim 1, characterised in that the measuring zone used is a strip of a support object which, by its roughness, machining traces, crystal structures, and/or a coating, has, on projection illumination, a random pattern with image contents distinguishable by the image recording means in successive zones.

3. A method according to claims 1 and 2, characterised in that the measuring zone is defined as a surface strip on part of a machine.

4. A method according to claims 1 and 2, characterised in that the measuring zone is defined as a strip of a transparent object which, if required, is provided with a coating giving a random pattern, such strip being trans-illuminated via the illumination means constructed as a projection means.

5. A method according to any one of claims 1 to 4, characterised in that magnifying means, screens or filters for improving the distinguishability of the structures are switched into the projection path between the illuminating means, the illuminated portion of the measuring zone, and the or each image recording means.

6. A method according to any one of claims 1 to 5, characterised in that the illumination means is a laser which scans line by line the image detail detectable by the image recording means.

7. A method according to any one of claims 1 to 6, characterised in that within the portions of the strip-like zone successively detectable by the image recording means smaller image portions are detected, the associated image signals are stored separately and, on evaluation, the exact position of the image detail on the measuring zone and hence the result of the measurement is calculated from the position of an image window aligned on the image portion in relation to the total image detail.

8. Apparatus for performing the method according to any one of claims 1 to 7, comprising a measuring zone on an object, illumination means and light-sensitive receiving means on a scanning means movable relatively to the object and comprising a secondary evaluation unit, comprising a computer and memory, addressing means and comparator means, for generating position signals defining the relative position of the scanning means on the measuring zone, in order to actuate display or control means, characterised in that the measuring zone is defined by a zone in the form of a strip on the object (1, 1a, 1b,) such zone having distinguishable random structures (2, 2a, 9) which are successively at least substantially free of repetition, in that the receiving means is at least one image recording means (4) detecting a portion of the measuring zone, and in that the evaluation unit (7) comprises a scale memory and a comparator means, signal values which define the image at the associated measuring point and which are associated with measuring zone measured points defined in a calibration operation by scanning of the measuring zone by the scanning means using a primary measuring system, are stored in the scale memory and the comparator means during the measurement compares with the memory values the signals generated by the image recording means and generates the position signals in accordance with the conformity.

## Revendications

1. Procédé de mesure de longueurs et d'angles, par voies opto-électroniques, dans lequel une distance de mesure (2) définie, située sur un objet (1), se présentant sous forme de bande et ayant des structures pouvant être distinguées suivant un ordre de succession, sont illuminées, des sections (6) successives de cette distance de mesure sont explorées par l'intermédiaire d'un ou de plusieurs dispositifs récepteurs (4) sensibles à la lumière, et des signaux de position, destinés à l'actionnement de dispositifs d'affichage ou de commande (8) étant obtenus, à partir des signaux des dispositifs récepteurs (4), en effectuant une comparaison avec des valeurs mémorisées, obtenues lors d'un processus d'étalonnage, avec utilisation d'un système hiérarchiquement supérieur,
caractérisé
- en ce que la distance de mesure (2) est définie sur l'objet (1) par une zone (2) se présentant sous forme de bande, présentant en succession des structures aléatoires, au moins largement non répétitives, pouvant être distinguées,
- en ce qu'on utilise comme dispositif récepteur (4) au moins un dispositif d'enregistrement d'images, appréhendant la distance de mesure, lors de l'exploration, des sections (6) se présentant en succession, non répétitives, pouvant être distinguées, et produisant des valeurs de signaux associées,
- en ce que, lors du processus d'étalonnage, avec utilisation du système de mesure hiérarchiquement supérieur, les points de mesure de la distance de mesure sont définis par mise en mémoire des signaux caractérisant l'image reçue au point de mesure spécifique de la distance de mesure et déterminant ce faisant une échelle de mesure,
- et en ce que, lors de la mesure proprement dite, les signaux produits à l'aide du ou des dispositifs (4) d'enregistrement d'image sont associés aux valeurs mémorisées déterminant l'échelle de mesure, d'où est déterminée la position du point de mesure spécifique sur la distance de mesure (2) et des signaux de position correspondants sont produits.

2. Procédé selon la revendication 1,
caractérisé en ce que l'on utilise comme distance de mesure une bande d'objet support présentant dans des zones successives, par sa rugosité, ses traces d'usinage, ses structures cristallines et/ou son revêtement, un modèle aléatoire lors de l'illumination sous projection, avec des contenus d'image pouvant être distingués par le dispositif d'enregistrement d'image.

3. Procédé selon les revendications 1 et 2,
caractérisé en ce que la distance de mesure est définie sous forme de bande superficielle appliquée sur une partie d'une machine.

4. Procédé selon les revendications 1 et 2,
caractérisé en ce que la distance de mesure est définie sous la forme d'une bande illuminée dans son volume par l'intermédiaire du dispositif d'illumination réalisé sous forme de dispositif de projection, bande d'un objet transparent, pourvu, le cas échéant, d'un revêtement donnant un modèle aléatoire.

5. Procédé selon l'une des revendications 1 à 4,
caractérisé en ce que des dispositifs grossisseurs, des trames ou des filtre destinés à améliorer la possibilité de distinction entre les structures sont mis en circuit dans le trajet de projection, entre le dispositif d'illumination, la section illuminée de la distance de mesure et le dispositif d'enregistrement d'image, respectivement les dispositifs d'enregistrement d'image.

6. Procédé selon l'une des revendications 1 à 5, caractérisé en ce qu'un laser, explorant ligne par ligne la partie d'image pouvant être appréhendée par le dispositif d'enregistrement d'image est prévu comme dispositif d'illumination.

7. Procédé selon l'une des revendications 1 à 6, caractérisé en ce qu'à l'intérieur des sections, pouvant être appréhendées successivement par le dispositif d'enregistrement d'image, de la zone en forme de bandes, sont appréhendées de petites parties d'image, qui sont stockées en mémoire séparément de leurs signaux image associés, et la position exacte, par rapport à l'ensemble des parties d'image, de la partie d'image sur la distance de mesure et, ainsi le résultat de mesure, étant calculé lors de l'évaluation, à partir de la position d'une fenêtre d'image, orientée sur la partie d'image.

8. Dispositif pour la mise en oeuvre du procédé selon l'une des revendications 1 à 7, avec une distance de mesure sur un objet, des dispositifs d'illumination et des dispositifs récepteurs, sensibles à la lumière, sur un dispositif d'exploration, réglable par rapport à l'objet, avec une unité d'évaluation disposée en aval et comportant un ordinateur avec une mémoire, des dispositifs d'adressage et des dispositifs comparateurs, pour produire des signaux de position définissant la position relative du dispositif d'exploration sur la distance de mesure, en vue d'actionner des dispositifs d'affichage ou de commande,
caractérisé en ce que la distance de mesure est définie sur l'objet (1, 1a, 1b) par une zone en forme de bande, présentant des structures aléatoires (2, 2a, 9), pouvant être distinguées, successives, au moins largement non répétitives, en ce qu'est prévu comme dispositif récepteur au moins un dispositif (4) d'enregistrement d'image appréhendant une partie de la distance de mesure, et en ce que l'unité (7) d'évaluation contient une mémoire d'échelles de mesure et un dispositif comparateur, étant stockées dans la mémoire d'échelles de mesure des valeurs de signaux, associés aux points de mesure de la distance de mesure et définis lors d'un processus d'étalonnage, par exploration de la distance de mesure à l'aide du dispositif d'exploration, avec utilisation d'un système de mesure hiérarchiquement supérieur, ces signaux de mesure définissant l'image au point de mesure spécifique et le dispositif comparateur comparant, lors de la mesure, les signaux produits par le dispositif d'enregistrement d'image aux valeurs mémorisées et produisant les signaux de position, d'une manière correspondant à la coïncidence obtenue.
